# FASCICULE DE BREVET EUROPEEN

(11) **EP 3 667 431 B1**
(45) Date de publication et mention de la délivrance du brevet: **04.06.2025**
(21) Numéro de dépôt: 18212241.6
(22) Date de dépôt: 13.12.2018
(51) Int. Cl.: G04B 13/02, G04B 19/02, G04B 27/00, G04B 35/00, F16H 55/17, F16D 7/02

(54) **MOBILE D'AFFICHAGE D'HORLOGERIE AVEC MECANISME DE REGLAGE DE LA FRICTION**
MOBILE ANZEIGEEINHEIT EINER UHR MIT REIBUNGSREGULIERUNGSMECHANISMUS
TIMEPIECE DISPLAY WHEEL WITH FRICTION ADJUSTMENT MECHANISM

(43) Date de publication de la demande: 17.06.2020
(73) Titulaire: Montres Breguet S.A., 1344 L'Abbaye (CH)
(72) Inventeur: ROCHAT, Fabrice, 1337 Vallorbe (CH); ZAUGG, Alain, 1347 Le Sentier (CH)
(74) Mandataire: ICB SA

(56) Documents cités:
- EP-A1- 2 765 462
- EP-A1- 2 957 963
- EP-A1- 2 977 829
- CN-U- 203 643 751
- JP-A- 2018 155 587

## Description

### Domaine de l'invention

L'invention concerne un mobile d'affichage d'horlogerie comportant au moins une lame élastique tendant à être rappelée vers une position de repos proche d'un axe d'affichage, pour sa coopération en entraînement par friction avec un arbre que comporte un mobile d'entraînement d'un mouvement ou d'un mécanisme d'horlogerie, autour dudit axe d'affichage.

L'invention concerne encore un ensemble de réglage d'affichage comportant au moins un tel mobile d'affichage.

L'invention concerne encore un mécanisme d'horlogerie, comportant au moins un mobile d'entraînement comportant un arbre agencé pour coopérer avec un tel mobile d'affichage et/ou un tel ensemble de réglage d'affichage

L'invention concerne encore un mouvement d'horlogerie comportant au moins un tel mécanisme, et/ou au moins un tel mobile d'affichage, et/ou au moins un tel ensemble de réglage d'affichage.

L'invention concerne encore une pièce d'horlogerie, notamment une montre, comportant au moins un tel mouvement, et/ou au moins un tel mécanisme, et/ou au moins un tel mobile d'affichage, et/ou au moins un tel ensemble de réglage d'affichage.

L'invention concerne le domaine des mécanismes d'affichage d'horlogerie.

### Arrière-plan de l'invention

Les systèmes de friction usuels en horlogerie, tels que lanternage et roue à friction, présentent plusieurs inconvénients bien connus :
- couple de friction difficilement maîtrisable ;
- faible stabilité du couple de friction dans le temps ;
- montage et démontage peu aisés.

Le document JP2018 155587A au nom de SEIKO INSTR. INC. décrit un mobile à position ajustable par glissement, comportant un corps annulaire porteur de bras sensiblement radiaux et agencés pour pincer élastiquement un même arbre, à différentes positions axiales de cet arbre.

Le document EP2957963A1 au nom de ETA Manufacture Horlogère Suisse décrit un mobile d'horlogerie en plusieurs parties, qui comporte un arbre lequel comporte, autour d'un premier axe de pivotement, un logement agencé pour la réception d'un deuxième composant constitué par une planche dans une position axiale unique, cette planche comportant une surface périphérique en référence à un deuxième axe de pivotement. L'arbre comporte, de part et d'autre de ce logement, selon la direction dudit premier axe de pivotement, une surface d'appui de butée axiale agencée pour maintenir en appui de butée la planche sur l'arbre. Cette planche comporte un premier bras élastique radialement par rapport au deuxième axe de pivotement, et au moins un deuxième bras rigide ou élastique radialement par rapport au deuxième axe de pivotement, ce premier bras élastique et ce deuxième bras formant ensemble une pince agencée pour serrer une surface d'appui radiale que comporte l'arbre au voisinage de la surface d'appui de butée axiale. Cet arbre comporte une rampe d'introduction, qui est agencée pour repousser radialement chaque premier bras élastique et chaque deuxième bras élastique quand la planche en comporte, pour permettre l'introduction de la planche sur l'arbre.

Le document EP2765462A1 au nom de ETA Manufacture Horlogère Suisse décrit une roue anti-choc d'horlogerie pour l'entraînement d'un composant présentant un balourd non nul par rapport à un axe de pivotement de cette roue, laquelle roue comporte, d'une part un arbre pour son guidage en pivotement autour de l'axe de pivotement, et d'autre part des moyens d'entraînement agencés ou rapportés sur un flasque que comporte la roue. Cette roue comporte au moins un élément flexible entre l'arbre et le flasque. Ce flasque comporte une portée cylindrique coopérant en appui de centrage avec une portée cylindrique complémentaire que comporte l'arbre, pour assurer la parfaite concentricité des moyens d'entraînement avec l'arbre.

Le document EP2977829A1 au nom de ETA Manufacture Horlogère Suisse décrit un ensemble à mobile de freinage d'horlogerie, comportant un arbre comportant une première surface coopérant en guidage de pivotement avec une deuxième surface d'une roue montée pivotante sur l'arbre, où la première surface ou respectivement la deuxième surface comporte au moins une surface de freinage au niveau d'au moins un premier bras soumis à l'action d'au moins un premier moyen de rappel élastique, monobloc avec l'arbre ou respectivement la roue, et agencé pour exercer un effort radial par rapport à l'axe de pivotement sur la deuxième surface ou respectivement la première surface. Cet ensemble à mobile de freinage comporte des moyens intrinsèques d'ajustement par valeurs discrètes de la friction exercée par la surface de freinage sur la deuxième surface ou respectivement la première surface.

### Résumé de l'invention

L'invention se propose de définir un mécanisme de réglage, avec système de friction, permettant le réglage de tout mobile d'affichage, et permettant notamment la mise à l'heure, dans les mouvements horlogers.

A cet effet, l'invention concerne un mobile d'affichage d'horlogerie avec mécanisme de réglage à friction selon la revendication 1.

L'invention concerne encore un ensemble de réglage d'affichage comportant au moins un tel mobile d'affichage.

L'invention concerne encore un mécanisme d'horlogerie, comportant au moins un mobile d'entraînement comportant un arbre agencé pour coopérer avec un tel mobile d'affichage et/ou un tel ensemble de réglage d'affichage

L'invention concerne encore un mouvement d'horlogerie comportant au moins un tel mécanisme, et/ou au moins un tel mobile d'affichage, et/ou au moins un tel ensemble de réglage d'affichage.

L'invention concerne encore une pièce d'horlogerie, notamment une montre, comportant au moins un tel mouvement, et/ou au moins un tel mécanisme, et/ou au moins un tel mobile d'affichage, et/ou au moins un tel ensemble de réglage d'affichage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en perspective, un mobile d'affichage selon l'invention, comportant un flasque et une structure monobloc élastique faisant ressort, assemblés l'un à l'autre ;
- la figure 2 représente, de façon schématisée, et en perspective éclatée, les composants du mobile d'affichage alignés avec l'arbre d'un mobile entraîneur ;
- la figure 3 représente, de façon schématisée, et en vue en plan, la structure monobloc élastique faisant ressort ;
- la figure 4 représente, de façon schématisée, et en vue en plan, le flasque ;
- la figure 5 représente, de façon similaire à la figure 1, un outil agencé pour coopérer avec ce mobile d'affichage, pour l'écartement des lames élastiques qu'il comporte ;
- la figure 6 représente, de façon similaire à la figure 1, la coopération de l'outil de la figure 5 avec le mobile d'affichage, en position d'écartement des lames ;
- la figure 7 est une vue de côté des constituants de la figure 6, dans la même position de coopération ;
- la figure 8, similaire à la figure 7, montre l'approche de l'ensemble ainsi formé vers l'arbre du mobile d'entraînement :
- la figure 9 est une vue en coupe du mobile d'affichage enserrant l'arbre du mobile d'entraînement ;
- la figure 10 est une variante de la figure 4 avec des reliefs supplémentaires pour l'écartement des lames, et des éléments d'indexage relatif avec la structure monobloc élastique faisant ressort, représentée à la figure 11 ;
- la figure 12 représente, de façon similaire à la figure 1, une variante dont les lames ne sont pas en porte-à-faux, mais tendues entre leurs deux extrémités au voisinage de la périphérie du flasque ;
- la figure 13 est un schéma-blocs représentant une montre comportant un mouvement avec un mécanisme comportant un mobile entraîneur, et un ensemble de réglage d'affichage comportant un mobile d'affichage selon l'invention.

### Description détaillée des modes de réalisation préférés

L'invention concerne les systèmes de friction permettant les réglages, et tout particulièrement et non limitativement la mise à l'heure, dans les mouvements horlogers.

L'invention concerne plus particulièrement un mobile d'affichage 1 d'horlogerie, comportant au moins une lame élastique 4 tendant à être rappelée vers une position de repos proche d'un axe d'affichage DA, pour sa coopération en entraînement par friction avec un arbre 2 que comporte un mobile d'entraînement 3 d'un mouvement 100 ou d'un mécanisme d'horlogerie, autour de cet axe d'affichage DA.

Selon l'invention, le mobile d'affichage 1 comporte un flasque 5 comportant, face à chaque lame élastique 4, une ouverture 6 agencée pour l'insertion et le guidage d'un outil manoeuvré par un opérateur (tel que brucelles ou similaire) ou par un manipulateur robotisé, pour permettre l'écartement par cet outil de la lame élastique 4 par rapport à sa position de repos, et l'insertion du mobile d'affichage 1 sur un arbre 2 quand la lame élastique 4 est suffisamment écartée pour assurer son passage, et pour assurer une friction de valeur constante de l'ensemble des lames élastiques 4 sur l'arbre 2, quand les lames élastiques 4 sont en coopération de friction avec l'arbre 2 et quand l'outil n'est plus en contact avec les lames élastiques 4.

Plus particulièrement, le mobile d'affichage 1 comporte une pluralité de lames élastiques 4, qui sont agencées de façon à ce que la résultante, au niveau de l'axe d'affichage DA, des efforts radiaux qu'elles exercent sur un arbre 2 soit nulle.

Plus particulièrement, tel que visible sur la variante non limitative des figures, le mobile d'affichage 1 comporte deux lames élastiques 4, qui sont agencées symétriquement par rapport à l'axe d'affichage DA, et les ouvertures 6 sont des rainures oblongues symétriques par rapport à l'axe d'affichage DA. Plus particulièrement, ces ouvertures 6 sont des rainures oblongues 61, 62, rectilignes passant par 'axe d'affichage DA.

Toutes les lames élastiques 4 que comporte le mobile d'affichage 1 appartiennent à une structure monobloc élastique 7 commune, qui est agencée pour être montée pivotante sur le flasque 5, ou dans une variante qui ne relève pas de l'invention, pour être assemblée en position fixe avec le flasque 5, ou pour constituer le flasque 5.

Selon l'invention, la structure monobloc élastique 7 est agencée pour être montée pivotante sur le flasque 5, pour autoriser une plus grande extension radiale des lames élastiques 4 par rapport à l'axe d'affichage DA, et comporte des éléments d'indexage 8. Ces derniers sont agencés pour coopérer avec des éléments d'indexage complémentaire 9 que comporte le flasque 5, pour leur solidarisation en rotation quand les lames élastiques 4 sont en coopération de friction avec l'arbre 2 et quand l'outil 200 n'est plus en contact avec les lames élastiques 4.

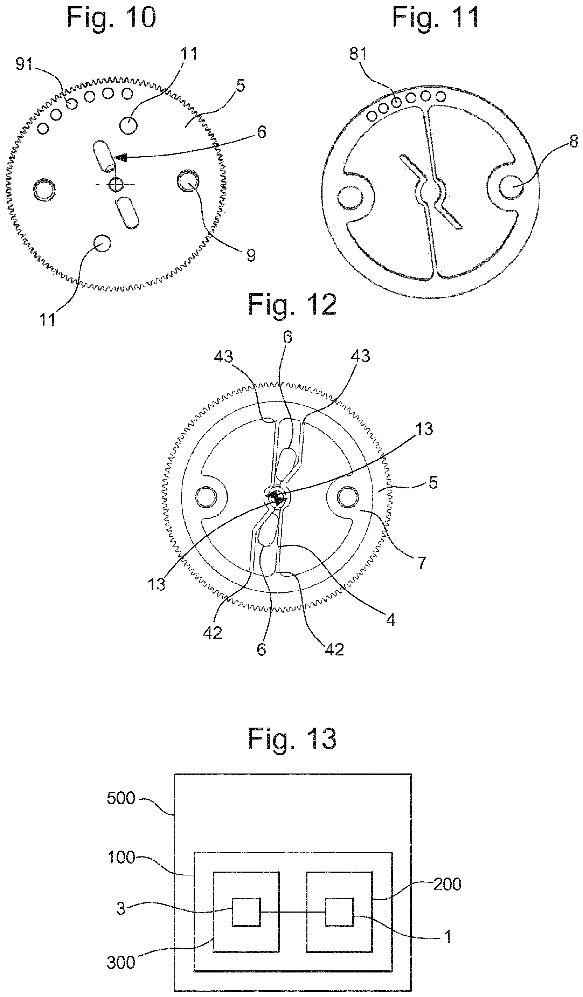

Plus particulièrement, tel que visible sur la figure 10, le flasque 5 comporte, face à chaque lame élastique 4, un relief 11 qui est agencé pour prendre appui sur la lame élastique 4 entre d'une part son encastrement 12 ou sa fixation à la structure monobloc élastique 7, et d'autre part une zone de friction 13 que comporte la lame élastique 4 au voisinage de l'axe d'affichage DA, pour modifier l'effort d'appui exercé par les lames élastiques 4 en fonction de la position angulaire relative entre le flasque 5 et la structure monobloc élastique 7.

Plus particulièrement, tel que visible sur les figures, la structure monobloc élastique 7 commune est amovible et agencée pour être assemblée en position fixe avec le flasque 5 qui est indexée, par la coopération d'éléments d'indexage 81 et d'éléments d'indexage complémentaire 91 au moyen d'une goupille ou similaire, dans une orientation angulaire relative particulière.

Dans une variante particulière non illustrée, la structure monobloc élastique 7 commune constitue le flasque 5.

Plus particulièrement, chaque lame élastique 4 comporte au moins une fixation 41 au flasque 5 ou à une structure monobloc élastique 7 commune rapportée sur le flasque 5, laquelle fixation 41 est éloignée de l'axe d'affichage DA, de façon à autoriser un débattement maximal de la lame élastique 4 dans une course radiale par rapport à l'axe d'affichage DA et au voisinage de l'axe d'affichage DA.

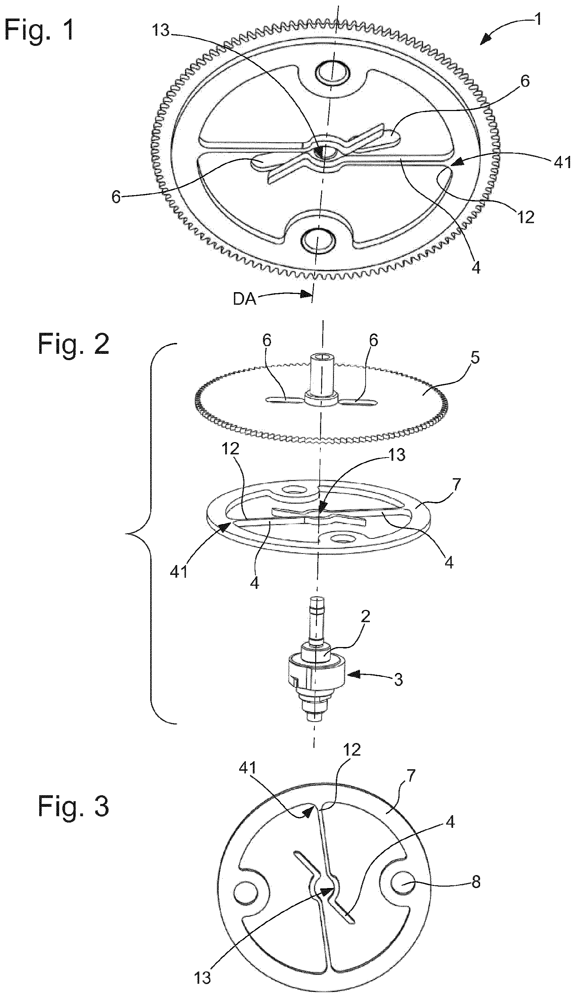

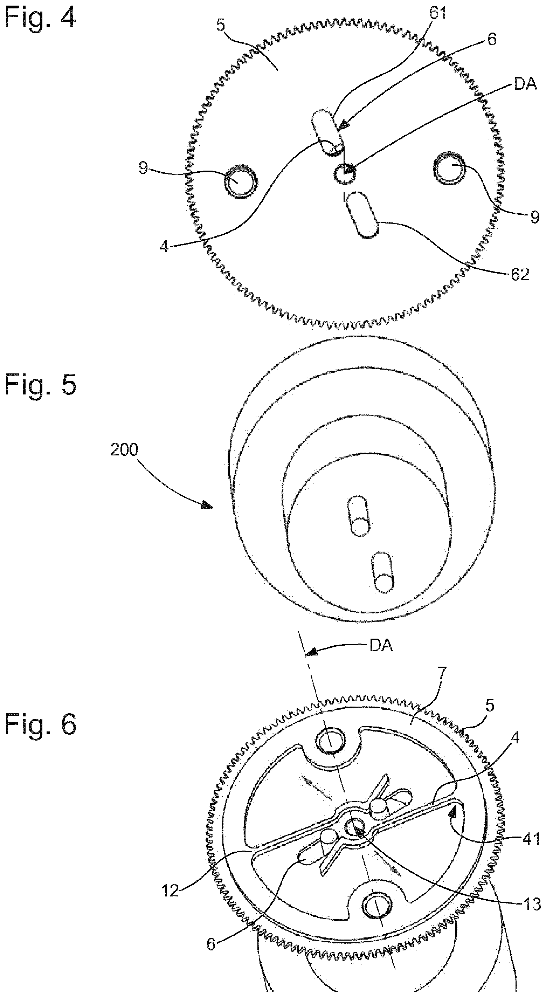

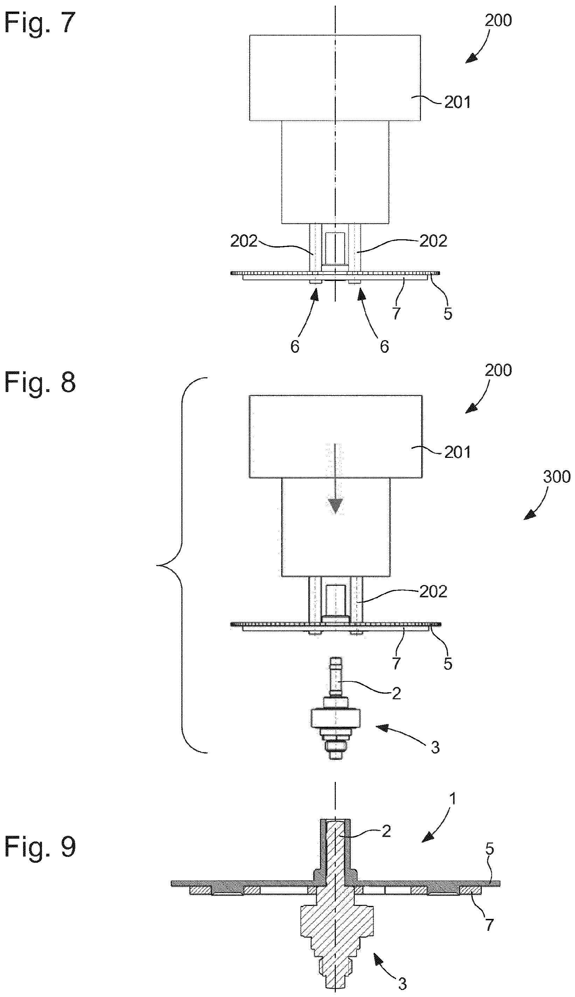

Dans la variante non limitative illustrée par les figures 1 à 11, chaque lame élastique 4 est en porte-à-faux par rapport à sa fixation 41, et comporte, à son extrémité distale, ou au voisinage de son extrémité distale, une zone de friction 13 qui est agencée pour coopérer en appui de friction avec un arbre 2.

Plus particulièrement, les ouvertures 6 comportent au moins un premier guidage traversant 61, qui est agencé pour autoriser l'insertion d'une première extrémité d'un outil, et au moins un deuxième guidage traversant 62, qui est agencé pour autoriser l'insertion d'une deuxième extrémité d'un outil. Et, dans au moins une position angulaire relative entre le flasque 5 et la au moins une lame élastique 4, et dans une position de repos de la au moins une lame élastique 4, la au moins une lame élastique 4 est en superposition au moins partielle avec le premier guidage traversant 61 et/ou le deuxième guidage traversant 62, de façon à être écartée de l'axe d'affichage DA lors de l'insertion de la première extrémité et de la deuxième extrémité d'un outil et/ou lors d'une rotation relative entre le flasque 5 et chaque lame élastique 4 sous l'effet d'une rotation imprimée par un utilisateur à un outil après son insertion.

La figure 12 illustre une autre variante qui comporte deux lames élastiques 4, chacune maintenue à ses deux extrémités 42 et 43 et en tension dans leur position de service. Plus particulièrement ces deux lames 4 sont symétriques par rapport à l'axe d'affichage DA. De façon particulière, ces deux lames sont parallèles l'une à l'autre sur un premier tronçon proche des encastrements, et convergent ensuite sensiblement vers l'axe d'affichage DA dans leur partie centrale.

L'invention concerne encore un ensemble de réglage d'affichage 200 comportant au moins un tel mobile d'affichage 1. Plus particulièrement, cet ensemble de réglage 200 comporte au moins un outil 201 à usage manuel ou pour un manipulateur robotisé, comportant des extrémités 202 agencées pour coopérer de façon complémentaire avec les ouvertures 6 que comporte le au moins un mobile d'affichage 1, lequel comporte une ouverture 6 distante de celle faisant face à une lame élastique 4 unique quand le au moins un mobile d'affichage 1 ne comporte qu'une seule lame élastique 4.

L'invention concerne encore un mécanisme 300 d'horlogerie, comportant au moins un mobile d'entraînement 3 comportant un arbre 2 agencé pour coopérer avec un tel mobile d'affichage 1, et/ou un tel ensemble de réglage d'affichage 200. Plus particulièrement, au moins un arbre 2 comporte une gorge ou des portées constituant des moyens de limitation axiale de l'ébat du mobile d'affichage 1 selon la direction de l'axe d'affichage DA.

L'invention concerne encore un mouvement 100 d'horlogerie, comportant au moins un tel mécanisme 300, et/ou au moins un tel mobile d'affichage 1, et/ou au moins un tel ensemble de réglage d'affichage 200.

L'invention concerne encore une pièce d'horlogerie 500, notamment une montre, comportant au moins un tel mouvement 100, et/ou au moins un tel mécanisme 300, et/ou au moins un tel mobile d'affichage 1, et/ou au moins un tel ensemble de réglage d'affichage 200.

En résumé, le mécanisme est conçu pour tout mobile d'affichage, et trouve une application particulière pour une friction de roue des heures, l'invention constitue une chaussée améliorée.

La structure monobloc élastique 7 faisant ressort est notamment montée solidaire avec le flasque 5, et sous ce dernier.

L'ensemble constitué par la structure monobloc élastique 7 et le flasque 5 est monté sur l'arbre 2 du mobile d'entraînement 3 à l'aide d'un outil manuel tel que brucelles, ou par un outil automatisé 200. Les extrémités de l'outil, ou des goupilles 202 qu'il comporte, se positionnent dans les ouvertures 6 du flasque 5, ce qui génère l'écartement des bras de la structure monobloc élastique 7 faisant ressort, constitués par des lames élastiques 4. L'ensemble constitué par la structure monobloc élastique 7 et le flasque 5 est posé sur l'arbre 2, et l'outil est retiré. Ainsi, les bras du ressort sont armés et génèrent un couple de friction sur l'arbre 2. Pour le démontage, l'outil est utilisé de la même manière.

Le couple de friction est facilement ajustable, en augmentant ou diminuant l'armage des bras du ressort, ou leurs dimensions (largeur/épaisseur).

La réalisation d'une portée sur l'arbre 2 est avantageuse pour permettre une limitation axiale de l'ensemble constitué par la structure monobloc élastique 7 et le flasque 5.

L'invention apporte différents avantages :
- un assemblage sans forcer, et sans déformation plastique ;
- un dimensionnement par calcul et une simulation facilités.
- un couple de friction facilement maîtrisable.
- une bonne stabilité dans le temps.

## Revendications

1. Mobile d'affichage (1) d'horlogerie comportant au moins une lame élastique (4) tendant à être rappelée vers une position de repos proche d'un axe d'affichage (DA), pour sa coopération en entraînement par friction avec un arbre (2) que comporte un mobile d'entraînement (3) d'un mouvement (100) ou d'un mécanisme d'horlogerie, autour dudit axe d'affichage (DA), où ledit mobile d'affichage (1) comporte un flasque (5) comportant, face à chaque dite lame élastique (4), une ouverture (6) agencée pour l'insertion et le guidage d'un outil manoeuvré par un opérateur ou par un manipulateur robotisé, pour permettre l'écartement par ledit outil de ladite lame élastique (4) par rapport à sa position de repos et l'insertion dudit mobile d'affichage (1) sur un dit arbre (2) quand ladite lame élastique (4) est suffisamment écartée pour assurer son passage, et pour assurer une friction de valeur constante de l'ensemble desdites lames élastiques (4) sur ledit arbre (2) quand lesdites lames élastiques (4) sont en coopération de friction avec ledit arbre (2) et quand ledit outil n'est plus en contact avec lesdites lames élastiques (4), et où toutes lesdites lames élastiques (4) que comporte ledit mobile d'affichage (1) appartiennent à une structure monobloc élastique (7) commune, ladite structure monobloc élastique (7) comportant des éléments d'indexage (8) agencés pour coopérer avec des éléments d'indexage complémentaire (9) que comporte ledit flasque (5) pour leur solidarisation en rotation quand lesdites lames élastiques (4) sont en coopération de friction avec ledit arbre (2) et quand ledit outil n'est plus en contact avec lesdites lames élastiques (4),
**caractérisé en ce que** ladite structure monobloc élastique (7) est agencée pour être montée pivotante sur ledit flasque (5) pour autoriser une plus grande extension radiale desdites lames élastiques (4) par rapport audit axe d'affichage (DA).

2. Mobile d'affichage (1) selon la revendication 1, **caractérisé en ce que** ledit mobile d'affichage (1) comporte une pluralité de dites lames élastiques (4) agencées de façon à ce que la résultante, au niveau dudit axe d'affichage (DA), des efforts radiaux qu'elles exercent sur un dit arbre (2) soit nulle.

3. Mobile d'affichage (1) selon la revendication 2, **caractérisé en ce que** ledit mobile d'affichage (1) comporte deux dites lames élastiques (4) agencées symétriquement par rapport audit axe d'affichage (DA), et **en ce que** lesdites ouvertures (6) sont des rainures oblongues symétriques par rapport audit axe d'affichage (DA).

4. Mobile d'affichage (1) selon la revendication 3, **caractérisé en ce que** lesdites ouvertures (6) sont des rainures oblongues (61 ; 62) rectilignes passant par ledit axe d'affichage (DA).

5. Mobile d'affichage (1) selon l'une des revendications 1 à 4, **caractérisé en ce que** ledit flasque (5) comporte, face à chaque dite lame élastique (4), un relief (11) agencé pour prendre appui sur ladite lame élastique (4) entre d'une part son encastrement (12) ou sa fixation à ladite structure monobloc élastique (7), et d'autre part une zone de friction (13) que comporte ladite lame élastique (4) au voisinage dudit axe d'affichage (DA), pour modifier l'effort d'appui exercé par lesdites lames élastiques (4) en fonction de la position angulaire relative entre ledit flasque (5) et ladite structure monobloc élastique (7).

6. Mobile d'affichage (1) selon l'une des revendications 1 à 5, **caractérisé en ce que** chaque dite lame élastique (4) comporte au moins une fixation (41) audit flasque (5) ou à une structure monobloc élastique (7) commune rapportée sur ledit flasque (5), laquelle fixation (41) est éloignée dudit axe d'affichage (DA) de façon à autoriser un débattement maximal de ladite lame élastique (4) dans une course radiale par rapport audit axe d'affichage (DA) et au voisinage dudit axe d'affichage (DA).

7. Mobile d'affichage (1) selon la revendication 6, **caractérisé en ce que** chaque dite lame élastique (4) est en porte-à-faux par rapport à sa dite fixation (41), et comporte, à son extrémité distale, ou au voisinage de son extrémité distale, une zone de friction (13) agencée pour coopérer en appui de friction avec un dit arbre (2).

8. Mobile d'affichage (1) selon l'une des revendications 1 à 7, **caractérisé en ce que** lesdites ouvertures (6) comportent au moins un premier guidage traversant (61) agencé pour autoriser l'insertion d'une première extrémité d'un outil, et au moins un deuxième guidage traversant (62) agencé pour autoriser l'insertion d'une deuxième extrémité d'un outil, et **en ce que**, dans au moins une position angulaire relative entre ledit flasque (5) et ladite au moins une lame élastique (4), et dans une position de repos de ladite au moins une lame élastique (4), ladite au moins une lame élastique (4) est en superposition au moins partielle avec ledit premier guidage traversant (61) et/ou ledit deuxième guidage traversant (62), de façon à être écartée dudit axe d'affichage (DA) lors de l'insertion de ladite première extrémité et de ladite deuxième extrémité d'un outil et/ou lors d'une rotation relative entre ledit flasque (5) et chaque dite lame élastique (4) sous l'effet d'une rotation imprimée par un utilisateur à un dit outil après son insertion.

9. Ensemble de réglage d'affichage (200) comportant au moins un mobile d'affichage (1) selon l'une des revendications 1 à 8, **caractérisé en ce que** ledit ensemble de réglage (200) comporte au moins un outil (201) à usage manuel ou pour un manipulateur robotisé, ledit outil comportant des extrémités (202) agencées pour coopérer de façon complémentaire avec lesdits ouvertures (6) que comporte ledit au moins un mobile d'affichage (1), lequel comporte une ouverture (6) distante de celle faisant face à une dite lame élastique (4) unique quand ledit au moins un mobile d'affichage (1) ne comporte qu'une seule dite lame élastique (4).

10. Mécanisme (300) d'horlogerie, comportant au moins un mobile d'entraînement (3) comportant un arbre (2) agencé pour coopérer avec un mobile d'affichage (1) selon l'une des revendications 1 à 8 et/ou un ensemble de réglage d'affichage (200) selon la revendication 9.

11. Mécanisme (300) selon la revendication 10, **caractérisé en ce qu'**au moins un dit arbre (2) comporte une gorge ou des portées constituant des moyens de limitation axiale de l'ébat dudit mobile d'affichage (1) selon la direction dudit axe d'affichage (DA).

12. Mouvement (100) d'horlogerie, comportant au moins un mécanisme (300) selon la revendication 10 ou 11, et/ou au moins un mobile d'affichage (1) selon l'une des revendications 1 à 8, et/ou au moins un ensemble de réglage d'affichage (200) selon la revendication 9.

13. Pièce d'horlogerie (500) comportant au moins un mouvement (100) selon la revendication 12, et/ou au moins un mécanisme (300) selon la revendication 10 ou 11, et/ou au moins un mobile d'affichage (1) selon l'une des revendications 1 à 8, et/ou au moins un ensemble de réglage d'affichage (200) selon la revendication 9.

14. Pièce d'horlogerie (500) selon la revendication 13, **caractérisée en ce qu'**elle est une montre.

## Patentansprüche

1. Uhrmachereianzeigedrehteil (1), umfassend mindestens ein elastisches Band (4), das dazu bestimmt ist, in eine Ruheposition nahe einer Anzeigeachse (DA) zurückgebracht zu werden, sodass es in Reibantrieb mit einer Welle (2), die in einem Mitnehmerdrehteil (3) eines Uhrwerks (100) oder eines Uhrmachereimechanismus enthalten ist, um die Anzeigeachse (DA) herum zusammenwirkt, wobei das Anzeigedrehteil (1) einen Flansch (5) umfasst, der, jedem von dem elastischen Band (4) zugewandt, eine Öffnung (6) umfasst, die zum Einführen und Führen eines von einer Bedienungsperson oder von einem automatisierten Manipulator betätigten Werkzeugs ausgeführt ist, um das Werkzeug in die Lage zu versetzen, das elastische Band (4) aus seiner Ruheposition zu bewegen und das Anzeigedrehteil (1) auf einer Welle (2) einzuführen, wenn sich das elastische Band (4) ausreichend weit entfernt befindet, um den Durchgang des Drehteils zu ermöglichen und einen konstanten Reibungswert aller der elastischen Bänder (4) auf der Welle (2) sicherzustellen, wenn die elastischen Bänder (4) in Reibungszusammenwirkung mit der Welle (2) stehen und das Werkzeug nicht mehr in Kontakt mit den elastischen Bändern (4) steht, und wobei alle elastischen Bänder (4), die in dem Anzeigedrehteil (1) enthalten sind, Teil einer einzelnen elastischen einstückigen Struktur (7) sind, wobei die elastische einstückige Struktur (7) Indexelemente (8) umfasst, die ausgeführt sind, mit komplementären Indexelementen (9) zusammenzuwirken, die für deren ineinandergreifende Drehung in dem Flansch (5) enthalten sind, wenn die elastischen Bänder (4) in Reibungszusammenwirkung mit der Welle (2) stehen und das Werkzeug nicht mehr in Kontakt mit den elastischen Bändern (4) steht, **dadurch gekennzeichnet, dass** die elastische einstückige Struktur (7) derart ausgeführt ist, dass sie an dem Flansch (5) schwenkbar angebracht ist, um eine größere radiale Ausdehnung der elastischen Bänder (4) in Bezug auf die Anzeigeachse (DA) zu ermöglichen.

2. Anzeigedrehteil (1) nach Anspruch 1, **dadurch gekennzeichnet, dass** das Anzeigedrehteil (1) eine Mehrzahl der elastischen Bänder (4) umfasst, die derart ausgeführt sind, dass die resultierende radiale Kraft auf die Anzeigeachse (DA), die durch die elastischen Bänder auf die Welle (2) ausgeübt wird, Null ist.

3. Anzeigedrehteil (1) nach Anspruch 2, **dadurch gekennzeichnet, dass** das Anzeigedrehteil (1) zwei elastische Bänder (4) umfasst, die in Bezug auf die Anzeigeachse (DA) symmetrisch angeordnet sind, und dass die Öffnungen (6) symmetrische längliche Kerben in Bezug auf die Anzeigeachse (DA) sind.

4. Anzeigedrehteil (1) nach Anspruch 3, **dadurch gekennzeichnet, dass** die Öffnungen (6) geradlinige längliche Kerben (61; 62) sind, die durch die Anzeigeachse (DA) verlaufen.

5. Anzeigedrehteil (1) nach einem der Ansprüche 1 bis 4, **dadurch gekennzeichnet, dass** der Flansch (5), jedem der elastischen Bänder (4) zugewandt, ein Relief (11) umfasst, das derart angeordnet ist, dass es auf dem elastischen Band (4) zwischen einerseits seiner Fassung (12) oder seinem Befestigungspunkt an der elastischen einstückigen Struktur (7) und andererseits einer Reibungszone (13) ruht, die in dem elastischen Band (4) in der Nähe der Anzeigeachse (DA) enthalten ist, um die von den elastischen Bändern (4) ausgeübte Anlagekraft abhängig von der relativen Winkelposition zwischen dem Flansch (5) und der elastischen einstückigen Struktur (7) zu ändern.

6. Anzeigedrehteil (1) nach einem der Ansprüche 1 bis 5, **dadurch gekennzeichnet, dass** jedes elastische Band (4) mindestens einen Befestigungspunkt (41) an dem Flansch (5) oder an einer einzelnen elastischen einstückigen Struktur (7) umfasst, die an dem Flansch (5) angebracht ist; wobei sich der Befestigungspunkt (41) von der Anzeigeachse (DA) entfernt befindet, um einen maximalen Bereich von radialer Bewegung des elastischen Bandes (4) in Bezug auf die Anzeigeachse (DA) in der Nähe der Anzeigeachse (DA) zu ermöglichen.

7. Anzeigedrehteil (1) nach Anspruch 6, **dadurch gekennzeichnet, dass** jedes elastische Band (4) in Bezug auf seinen Befestigungspunkt (41) freitragend ist und an seinem distalen Ende oder in der Nähe seines distalen Endes eine Reibungszone (13) umfasst, die derart angeordnet ist, dass sie in Reibungszusammenwirkung mit der Welle (2) steht.

8. Anzeigedrehteil (1) nach einem der Ansprüche 1 bis 7, **dadurch gekennzeichnet, dass** die Öffnungen (6) mindestens ein erstes Durchführungsloch (61), das ausgeführt ist, das Einführen eines ersten Endes eines Werkzeugs zu ermöglichen, und mindestens ein zweites Durchführungsloch (62) aufweisen, das ausgeführt ist, das Einführen eines zweiten Endes eines Werkzeugs zu ermöglichen, und dass sich in mindestens einer relativen Winkelposition zwischen dem Flansch (5) und dem mindestens einen elastischen Band (4) und in einer Ruheposition des mindestens einen elastischen Bandes (4) das mindestens eine elastische Band (4) in mindestens teilweiser Überlagerung mit dem ersten Durchführungsloch (61) und/oder dem zweiten Durchführungsloch (62) befindet, um von der Anzeigeachse (DA) wegbewegt zu werden, wenn das erste Ende und das zweite Ende eines Werkzeugs eingeführt werden, und/oder während einer Relativdrehung zwischen dem Flansch (5) und jedem von dem elastischen Band (4) unter der Wirkung einer Drehung, die von einem Benutzer auf ein Werkzeug nach seinem Einführen übertragen wird.

9. Anzeigeeinstellanordnung (200), umfassend mindestens ein Anzeigedrehteil (1) nach einem der Ansprüche 1 bis 8, **dadurch gekennzeichnet, dass** die Einstellanordnung (200) mindestens ein Werkzeug (201) zur manuellen Verwendung oder für einen automatisierten Manipulator umfasst, das Werkzeug Enden (202) aufweist, die derart angeordnet sind, dass sie in einer komplementären Weise mit den Öffnungen (6) zusammenzuwirken, die in dem mindestens einen Anzeigedrehteil (1) enthalten sind, das eine Öffnung (6) umfasst, die von derjenigen entfernt ist, die dem einzelnen elastischen Band (4) zugewandt ist, wenn das mindestens eine Anzeigedrehteil (1) nur eines von dem elastischen Band (4) aufweist.

10. Uhrmachereimechanismus (300), umfassend mindestens ein Mitnehmerdrehteil (3), das eine Welle (2) umfasst, die derart angeordnet ist, dass sie mit einem Anzeigedrehteil (1) nach einem der Ansprüche 1 bis 8 und/oder einer Anzeigeeinstellanordnung (200) nach Anspruch 9 zusammenwirkt.

11. Mechanismus (300) nach Anspruch 10, **dadurch gekennzeichnet, dass** mindestens eine Welle (2) eine Kerbe oder Schultern aufweist, die ein Mittel zum Begrenzen des axialen Spiels des Anzeigedrehteils (1) in der Richtung der Anzeigeachse (DA) bilden.

12. Uhrmachereiuhrwerk (100), umfassend mindestens einen Mechanismus (300) nach Anspruch 10 oder 11 und/oder mindestens ein Anzeigedrehteil (1) nach einem der Ansprüche 1 bis 8 und/oder mindestens eine Anzeigeeinstellanordnung (200) nach Anspruch 9.

13. Zeitmesser (500), der mindestens ein Uhrwerk (100) nach Anspruch 12 und/oder mindestens einen Mechanismus (300) nach Anspruch 10 oder 11 und/oder mindestens ein Anzeigedrehteil (1) nach einem der Ansprüche 1 bis 8 und/oder mindestens eine Anzeigeeinstellanordnung (200) nach Anspruch 9 umfasst.

14. Zeitmesser (500) nach Anspruch 13, **dadurch gekennzeichnet, dass** er eine Armbanduhr ist.

## Claims

1. A horology display mobile (1) comprising at least one resilient strip (4) intended to be returned to a rest position close to a display axis (DA), to cooperate in friction drive with an arbor (2) comprised in a carrier mobile (3) of a movement (100) or of a horology mechanism, about said display axis (DA), in which said display mobile (1) comprises a flange (5) comprising, facing each said resilient strip (4), an opening (6) arranged for the insertion and guiding of a tool operated by an operator or by an automated manipulator, to enable said tool to move said resilient strip (4) away from its rest position and to insert said display mobile (1) on a said arbor (2) when said resilient strip (4) is sufficiently far away to allow said mobile to pass through, and to ensure a constant friction value of all of said resilient strips (4) on said arbor (2) when said resilient strips (4) are in frictional cooperation with said arbor (2) and when said tool is no longer in contact with said resilient strips (4), and in which all said resilient strips (4) comprised in said display mobile (1) are part of a single resilient one-piece structure (7), said resilient one-piece structure (7) comprising indexing elements (8) arranged to cooperate with complementary indexing elements (9) comprised in said flange (5) for their interlocking rotation when said resilient strips (4) are in frictional cooperation with said arbor (2) and when said tool is no longer in contact with said resilient strips (4), **characterised in that** said resilient one-piece structure (7) is arranged to be pivotally mounted on said flange (5) to enable greater radial expansion of said resilient strips (4) with respect to said display axis (DA).

2. The display mobile (1) according to claim 1, **characterised in that** said display mobile (1) comprises a plurality of said resilient strips (4) arranged such that the resultant radial force, on said display axis (DA), exerted by said resilient strips on a said arbor (2) is zero.

3. The display mobile (1) according to claim 2, **characterised in that** said display mobile (1) comprises two said resilient strips (4), symmetrically arranged with respect to said display axis (DA), and **in that** said openings (6) are symmetrical oblong grooves with respect to said display axis (DA).

4. The display mobile (1) according to claim 3, **characterised in that** said openings (6) are rectilinear oblong grooves (61; 62) passing through said display axis (DA).

5. The display mobile (1) according to any of claims 1 to 4, **characterised in that** said flange (5) comprises, facing each said resilient strip (4), a relief (11) arranged to rest on said resilient strip (4) between, on one hand, its setting (12) or its point of attachment to said resilient one-piece structure (7), and, on the other hand, a friction zone (13) comprised in said resilient strip (4) in proximity to said display axis (DA), to change the abutment force exerted by said resilient strips (4) depending on the relative angular position between said flange (5) and said resilient one-piece structure (7).

6. The display mobile (1) according to any of claims 1 to 5, **characterised in that** each said resilient strip (4) comprises at least one point of attachment (41) to said flange (5) or to a single resilient one-piece structure (7) fitted on said flange (5); said attachment (41) is remote from said display axis (DA) in order to allow a maximum range of radial motion of said resilient strip (4) with respect to said display axis (DA) and in proximity to said display axis (DA).

7. The display mobile (1) according to claim 6, **characterised in that** each said resilient strip (4) is cantilevered with respect to its attachment point (41), and comprises, at its distal end or in proximity to its distal end, a friction zone (13) arranged to cooperate in frictional cooperation with a said arbor (2).

8. The display mobile (1) according to any of claims 1 to 7, **characterised in that** said openings (6) have at least a first through guide hole (61) arranged to allow the insertion of a first end of a tool and at least a second through guide hole (62) arranged to allow the insertion of a second end of a tool, and **in that**, in at least one relative angular position between said flange (5) and said at least one resilient strip (4), and in a rest position of said at least one resilient strip (4), said at least one resilient strip (4) is in at least partial superposition with said first through guide hole (61) and/or said second through guide hole (62), in order to be moved away from said display axis (DA) when said first end and said second end of a tool are inserted and/or during a relative rotation between said flange (5) and each said resilient strip (4) under the effect of a rotation imparted by a user to a said tool following its insertion.

9. A display setting assembly (200) comprising at least one display mobile (1) according to any of claims 1 to 8, **characterised in that** said setting assembly (200) comprises at least one tool (201) for manual use or for an automated manipulator, said tool having ends (202) arranged to cooperate in a complementary manner with said openings (6) comprised in said at least one display mobile (1), which comprises an opening (6) remote from the one facing a said single resilient strip (4) when said at least one display mobile (1) has only one said resilient strip (4).

10. A horology mechanism (300) comprising at least one carrier mobile (3) comprising an arbor (2) arranged to cooperate with a display mobile (1) according to any of claims 1 to 8 and/or a display setting assembly (200) according to claim 9.

11. The mechanism (300) according to claim 10, **characterised in that** at least one said arbor (2) has a groove or shoulders forming means for limiting the axial endshake of said display mobile (1) in the direction of said display axis (DA).

12. A horology movement (100) comprising at least one mechanism (300) according to claim 10 or 11, and/or at least one display mobile (1) according to any of claims 1 to 8, and/or at least one display setting assembly (200) according to claim 9.

13. A timepiece (500) comprising at least one movement (100) according to claim 12, and/or at least one mechanism (300) according to claim 10 or 11, and/or at least one display mobile (1) according to any of claims 1 to 8, and/or at least one display setting assembly (200) according to claim 9.

14. The timepiece (500) according to claim 13, **characterised in that** it is a watch.
